**Europäisches Patentamt**

**European Patent Office**

**Office européen des brevets**

(11) Veröffentlichungsnummer : **0 426 716 B1**

(12) # EUROPÄISCHE PATENTSCHRIFT

(45) Veröffentlichungstag der Patentschrift :
**26.05.93 Patentblatt 93/21**

(51) Int. Cl.$^5$ : **C08L 23/16**, C08K 7/14,
C08K 3/34, E06B 1/26,
E06B 3/20

(21) Anmeldenummer : **89908404.0**

(22) Anmeldetag : **25.07.89**

(86) Internationale Anmeldenummer :
**PCT/EP89/00876**

(87) Internationale Veröffentlichungsnummer :
**WO 90/01519 22.02.90 Gazette 90/05**

(54) **PROFILLEISTE AUS THERMOPLASTISCHEM KUNSTSTOFF.**

(30) Priorität : **29.07.88 DE 3825796**

(43) Veröffentlichungstag der Anmeldung :
**15.05.91 Patentblatt 91/20**

(45) Bekanntmachung des Hinweises auf die
Patenterteilung :
**26.05.93 Patentblatt 93/21**

(84) Benannte Vertragsstaaten :
**AT BE CH DE FR GB IT LI LU NL SE**

(56) Entgegenhaltungen :
**EP-A- 0 039 396
US-A- 4 153 587
US-A- 4 603 153**

(73) Patentinhaber : **HÜLS TROISDORF
AKTIENGESELLSCHAFT
Postfach 11 65
W-5210 Troisdorf (DE)**

(72) Erfinder : **SPIELAU, Paul
Van-Gogh-Platz 10
W-5210 Troisdorf (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Fenster- oder Türprofilleiste aus thermoplastischem Kunststoff sowie hierfür besonders geeignete Formmasse

### Technisches Gebiet

Die Erfindung betrifft eine Profilleiste für die Herstellung von Fenster- und Türrahmen aus thermoplastischem Kunststoff sowie eine hierfür besonders geeignete Formmasse.

### Stand der Technik

Fenster- und Türrahmen aus Kunststoff werden heute bevorzugt aus PVC-hart hergestellt. PVC als nichtkristallines Polymer ist bei Raumtemperatur ein recht steifer Kunststoff, verliert aber wegen seines niedrigen Erweichungsbereiches bei Temperaturerhöhung recht schnell seine Steifigkeit. Um die Gebrauchstüchtigkeit als Fenster- und Türrahmen sicherzustellen, wird häufig mit sogenannten Schlagzähmodifiern, die die Steifigkeit und die Wärmeformbeständigkeit noch weiter senken, gearbeitet. Dabei wird allerdings das Kältebruchverhalten in wünschenswerter Weise verbessert und die gute Verschweißbarkeit der Profile untereinander nicht verschlechtert.

### Aufgabe der Erfindung

Aufgabe der Erfindung war es, extrudierte Profilleisten für Fenster- und Türrahmen aus thermoplastischen Kunststoffen herzustellen, die möglichst die gleiche oder höhere Steifigkeit als PVC-Profile zeigen und ebenso günstig zu verarbeiten bzw. zu Rahmen zu verschweißen sein sollen unter Wahrung der Gebrauchstüchtigkeit in der Kälte und in der Wärme.

### Darstellung der Erfindung

Die Erfindung löst die gestellte Aufgabe mit Profilen auf Basis von Polypropylen oder Copolymeren des Propylens, modifiziert mit Ethylen-Propylen-Dienkautschuken (EPDM) und/oder Ethylen-Propylenkautschuken (EPM), und verstärkt mit Glasfasern und Talkum.

Es werden dabei Polypropylen und/oder Propylencopolymere mit 1 bis 10 Gew.-% anderer Olefinmonomere mit 2 bis 8 C-Atomen mit MFI-Werten (DIN 53 735) [230/ 2,16] von 0,1 bis 8 g/10 min und vorzugsweise von 0,3 bis 5 g/10 min und/oder Polyethylen und/oder Ethylencopolymeren mit 1 bis 8 Gew.-% anderer Olefinmonomere mit 3 bis 8 C-Atomen verwendet mit MFI-Werten [190/2,16] von < 0,1 g/10 min und vorzugsweise MFI [190/5] von < 0,1 g/10 min.

Ein übliches schlagzäh modifiziertes PVC-Fensterprofil besitzt einen E-Modul bei 23° C von ca. 2400 N/mm². Die erfindungsgemäß eingesetzten Polyolefinpolymere decken aber nur einen Bereich von 700 bis 1400 N/mm² ab. Erst durch die verstärkenden Zusätze an Glasfasern und Talkum wird ein höherer E-Modul der extrudierten Profile erreicht.

Diese wiederum verschlechtern die Kältebrucheigenschaften und bei höheren Füllgraden auch die Schweißbarkeit der Profile bzw. stören das Extrusionsverhalten der Massen und fördern den Maschinenverschleiß.

Um die Kälteeigenschaften zu verbessern, werden die Polyolefinkautschuke EPDM und/oder EPM mitverwendet, die jedoch wiederum für sich allein betrachtet die Steifigkeit und die Schweißbarkeit und das Extrusionsverhalten verschlechtern.

Es war daher, trotz sich widersprechender Eigenschaften der einzelnen Rezepturkomponenten, um so überraschender, daß die obengenannte Aufgabenstellung mit den vorgenannten Komponenten in synergistischer Weise gelöst werden konnte. Eine bevorzugte Ausführung der Erfindung wird mit extrudierten Profilleisten aus Formmassen, enthaltend

A) 100 Gew.Teile Polypropylen und/oder Propylencopolymer,
B) 6 - 28 Gew.-Teile EPDM und/oder EPM,
C) 0 - 49 Gew.-Teile Polyethylen und/oder Ethylencopolymer,
D) 1 - 8 Gew.-Teile Glasfasern,
E) 20 - 45 Gew.-Teile Talkum,
F) 7 - 15 Gew.-Teile Titandioxid,
G) 0,5 - 2 Gew.-Teile Polyolefinstabilisatoren erreicht, wobei die Profile

a) eine Füllstoff-Volumenkonzentration FVK an Glasfasern, Talkum und Titandioxid von < 14 Vol.-% und vorzugsweise < 12 Vol.-%

b) und einen E-Modul bei 23° C von > 2000 N/mm² und vorzugsweise > 2500 N/mm² aufweisen.

Die unter a) genannte Füllstoff-Volumenkonzentration FVK an Glasfasern, Talkum und Titandioxid von < 14 Vol.-% einzuhalten, ist insbesondere für eine gute Verschweißbarkeit der Profile untereinander, für eine gute Extrudierbarkeit und für gute Oberflächen der Profile wichtig, wobei man mit ausgewählten Rezepturen die geforderten Steifigkeiten nach b), gemessen als E-Modul, erreicht.

Da es sich um ein mehrphasiges System, auch bei den Polymeren unter A), B) und C) handelt, ist es wichtig, eine geschlossene Dispersionsphase durch das Propylenpolymer auszubilden. Bevorzugt wird hierzu das angegebene Mengenverhältnis Propylenpolymerisat (Komponente A) : Ethylenpolymerisat (Komponente C) > 2 eingehalten.

Die Füllstoff-Volumenkonzentration FVK wird nach folgender Gleichung bestimmt:

$$\text{FVK (Vol. - \%)} = \frac{\dfrac{D}{\rho_D} + \dfrac{E}{\rho_E} + \dfrac{E}{\rho_F}}{\dfrac{A}{\rho_A} + \dfrac{B}{\rho_B} + \dfrac{C}{\rho_C} + \dfrac{D}{\rho_D} + \dfrac{E}{\rho_E} + \dfrac{F}{\rho_F}} \times 100\ \%$$

wobei als Dichten ρ für die Polyolefine und die Polyolefinkautschuke die Werte der jeweils verwendeten Polymere in g/ml eingesetzt werden. Als effektive Dichte für Glasfasern werden 2,5 g/ml, für Talkum 2,345 g/ml und für Titandioxid 3,9 g/ml eingesetzt.

Titandioxid (Komponente F) dient als Lichtschutzmittel und wird mit steigenden Mengen an Polymeren A), B) und C) in steigenden Mengen verwendet. Als Titandioxidtyp wird bevorzugt Rutil verwendet mit einem $TiO_2$-Gehalt > 90 % der Klasse R 2 nach DIN 55 912 und einer Korngröße von 0,2 bis 0,3 um.

Als Propylenpolymerisate kommen sowohl Homopolymerisate mit Dichten von 0,900 bis 0,910 g/ml und E-Moduli von 1300 bis 1500 N/mm² und/oder Block-Copolymere des Propylens mit Olefinen mit 2 bis 8 C-Atomen mit Dichten von 0,900 bis 0,910 g/ml und E-Moduli von 1100 bis 1300 N/mm² und/oder Random-Copolymeren des Propylens mit Olefinen mit 2 bis 8 C-Atomen mit Dichten von 0,895 bis 0,910 g/ml und E-Moduli von 800 bis 1200 N/mm² in Frage. Die Werte für den MFI 230/2,16 liegen zwischen 0,1 und 8,0 g/10 min, vorzugsweise zwischen 0,3 und 5,0 g/10 min (DIN 53 735).

Im Rahmen der vorliegenden Erfindung sind unter EPDM bzw. EPM (Komponente B) Polymere zu verstehen, die aus Ethylen, Propylen, und ggf. einem oder mehreren Mehrfach-Olefin(en) mit Hilfe sogenannter Ziegler-Natta-Katalysatoren, die zusätzlich noch Aktivatoren und Modifikatoren enthalten können, in Lösung oder Dispersion bei Temperaturen von -30 bis +100° C, z.B. nach den Verfahren der DE-AS 15 70 352, DE-AS 15 95 442 und DE-AS 17 20 450 sowie der DE-OS 24 27 343 hergestellt werden können. Hierbei sind bevorzugt gesättigte Polyolefinkautschuke, die aus 15 bis 90 Gew.-%, vorzugsweise 30 bis 75 Gew.-% Ethylen und aus 85 bis 10 Gew.-%, vorzugsweise 70 bis 25 Gew.-% Propylen und/ oder Buten-(I) bestehen, und ungesättigte Polyolefinkautschuke, die außer aus Ethylen und Propylen oder Buten-(I) aus einem Mehrfach-Olefin bestehen, und zwar in einer solchen Menge, daß in den Kautschuken 0,5 bis 30 Doppelbindungen/1000 C-Atome enthalten sind. Besonders bevorzugte Mehrfach-Olefine sind cis- und trans-Hexadien-(1,4), Dicyclopentadien, 5-Methylen-, 5-Ethyliden- und 5-Isopropyliden-2-norbornen.

Als Ethylenpolymerisate können sowohl Hochdruck- als auch Niederdruckpolyethylen und mit anderen 2 bis 8 C-Atome enthaltenden Olefinmonomeren copolymerisierte Polyethylene im Dichtebereich von 0,910 bis 0,960 g/ml und mit Werten des MFI's [190/2,16] von < 0,1 g/10 min und vorzugsweise MFI's [190/5] von < 0,1 g/10 min verwendet werden (DIN 53 735). Bei [190/21,6] beträgt der MFI bevorzugt < 5g/10 min.

Als Glasfasern setzt man bevorzugt E-Glasfasern mit einem Durchmesser von 8 bis 15 um und einer Länge von 0,5 bis 5 mm bei einer Direktcompoundierung ein. Es kann jedoch auch ein Batch aus Propylenpolymerisat und obengenannten Glasfasern hergestellt werden und dieses in der nach der Rezeptur für die Glasfasermenge notwendigen Menge eingesetzt werden. Das mit den Glasfasern in das Compound eingebrachte Propylenpolymerisat ist in die unter A) genannte Polypropylenmenge einzurechnen.

Talkum wird bei der Direktcompoundierung in Pulverform mit einem Weißgrad > 84 % und einer Korngrößenverteilung von 0,2 bis 50 um eingesetzt oder es kann, wie bei den Glasfasern beschrieben, als Batch mit Propylenpolymerisat angewandt werden.

Als Stabilisatoren werden sowohl UV-Absorber, wie z.B. Benzophenone, Quencher oder HALS, als auch Wärmestabilisatoren/Antioxidantien, wie z.B. sterisch gehinderte Phenole oder sec. aromatische Amine, Thioether, Phosphite und Phosphonite eingesetzt.

Enthalten sein können zusätzlich noch Verarbeitungshilfsmittel wie Gleitmittel, Antistatika und Farbmittel in bei Polyolefinverarbeitung üblicher Qualität und Quantität.

Die Herstellung der beanspruchten thermoplastischen Massen als Granulat zur Extrusion von Profilen kann z.B. in einem marktgängigen kühlbaren Innenmischer mit Stempel, ggf. unter Erwärmen vorgenommen werden. Die Zeiten bis zur Homogenisierung sind von der verwendeten Rezeptur, der Struktur der Ausgangsstoffe, den Konstruktionsmerkmalen der Mischanlage und der Weiterverarbeitungsaggregate und den gewählten Verfahrensbedingungen, wie Massetemperaturen (im allgemeinen 200 bis 220° C), Füllgrad des Innenmischers und Rotorumdrenungszahlen (im allgemeinen bis 100, vorzugsweise 10 bis 40 Upm) abhängig und betragen im allgemeinen zwischen 1 bis 100 min. Nach ausreichender Homogenisierung werden die Massen ausgestoßen. Die aus dem Innenmischer ausgetragenen Massen werden anschließend, z.B. durch Walzenpaare oder schneckengetriebene Aggregate, in Bänder oder Stränge überführt und entweder granuliert oder unmittelbar den Weiterverarbeitungsaggregaten zugeführt. Es ist jedoch auch eine kontinuierliche Mischung, z.B. auf einem Zweiwellenkneter, Bauart Werner & Pfleiderer oder Buss, aus den Einzelkomponenten oder aus Einzelkomponenten und Batchen möglich. Geeignete Batche sind z.B. Talkum in Polypropylen, z.B. Vestolen ® P 7072 T und Hostalen ® PPN 7580 TV 20 bzw. Hostalen ® PPN 7590 TV 40, Glasfasern in Polypropylen, z.B. Vestolen ® P 7032 G und Hostalen ® PPN 7790 GV 2/30 und Polyolefinkautschuk in Polyethylen, z.B. Vestopren ® 20000 oder in Polypropylen, z.B. Vistaflex ® VN 5. Die Arbeitstemperaturen der Zweiwellenkneter liegen dabei zwischen 190 und 230° C, vorzugsweise zwischen 200 und 220° C.

Die Extrusion der Fenster- und Türrahmenprofile aus den wie vorher beschrieben hergestellten Massen kann sowohl mit Ein- als auch mit Doppelspindelextrudern durchgeführt werden, wobei Massetemperaturen von 190 bis 210° C und Massedrücke von 60 bis 100 bar gut zur Ausformung der Profile geeignet sind. Die Profile für Fenster- und Türrahmen sind überwiegend als Hohlprofile mit unsymmetrischen Querschnitten gestaltet. Sie sind den bekannten PVC-Profilen für Fenster und Türen mindestens gleichwertig in den erzielbaren Eigenschaften. Darüber hinaus weisen sie nicht die Nachteile von PVC auf, insbesondere zeigen sie keine chemischen Zerstörungen durch Witterungseinflüsse.

Die Extrusion der Fenster- und Türrahmen aus den vorgenannten thermoplastischen Massen kann jedoch auch im Coextrusionsverfahren durchgeführt werden, wobei aus einem zweiten Extruder eine Ummantelung, zweckmäßigerweise aus hochgefülltem, hochstabilisierten Polyethylen, ggf. unter Verwendung eines Haftvermittlers, aufextrudiert wird.

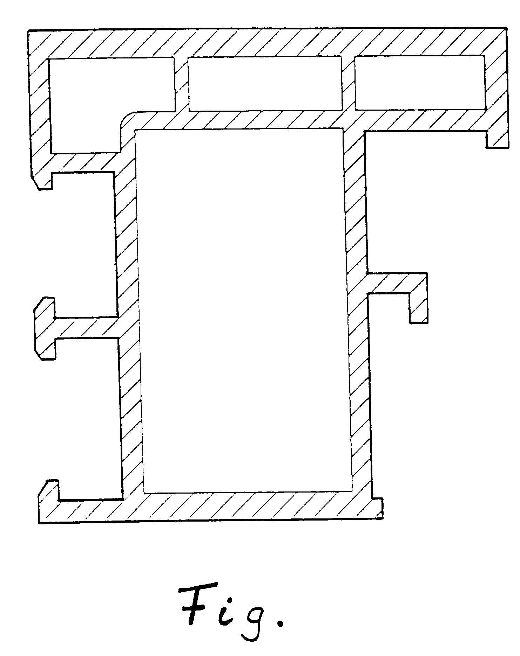

## Kurze Beschreibung der Zeichnung

Die Figur zeigt einen querschnitt durch eine erfindungsgemäße Profilleiste mit an sich bekanntem Aufbau. Die nachstehenden Beispiele sollen die Erfindung näher erläutern.

## Wege zur Ausführung der Erfindung

### Beispiel 1 bis 18

Die in Tabelle 1 genannten Gew.-Teile der einzelnen Zuschlagstoffe werden in einem Henschelmischer kurz homogenisiert und auf einer Zweiwellenplastifizierschnecke vom Typ Werner & Pfleiderer ineinander dispergiert und granuliert. Die Massetemperaturen betragen dabei 210 bis 225° C.

Als Polypropylen wird Copolymeres mit einem E-Modul von 1125 N/mm$^2$ und einer Dichte von 0,907 g/ml und einem MFI 230/2,16 von 1,3 g/10 min (Stamylan P 83 M 10) eingesetzt.

Als Polyolefinkautschuk wird ein Ethylen-Propylen-Dienkautschuk mit einem Ethylengehalt von 67 Gew.-% und einem Dien-Gehalt von 3 Gew.-% mit einer Polymerrohfestigkeit von 13,5 N/mm$^2$ und einer Schmelzwärme von 30 J/g, käuflich als Buna AP 437, verwendet.

Als Polyethylen wird ein Niederdruckpolyethylen der Dichte 0,952 g/ml mit einem MFI [190/5] von < 0,1 g/10 min (Lupolen 5261 %) verwendet, der MFI [190/21,6] betrug 2 g/10 min (DIN 53 735).

Die Glasfasern werden in Form eines Vorgranulates (Batch) aus Propylenhomopolymerisat mit Glasfasern in einem Gewichtsverhältnis 70 : 30 eingesetzt (Hostalen PPW VP 7790 GV 2/30), wobei die zu dem Glasfaseranteil zugehörige menge an Polypropylen der unter A genannten Polypropylenmenge zugerechnet ist.

Als Talkum wird eine eisenarme Type (Weißgrad 84,2 %) mit einem Kornsprektrum von 0,5 bis 50 µ eingesetzt.

Als Titandioxid wird ein Rutil der Klasse 2 (DIN 55 912) mit einer Korngrößenverteilung von 0,2 bis 0,3 u verwendet.

Die in Tabelle 1 genannten Mengen an Stabilisatoren bestehen zu 40 Gew.-% aus UV-Absorber (sterisch gehindertes Amin-Derivat) und zu 60 Gew.-% aus Thermostabilisatoren/Antioxidantien aus einem organischen Sulfid und einem sterisch gehinderten Arylalkylglykolester.

Das so hergestellte Granulat wird einem Doppelschneckenextruder zugeführt und bei einer Massetemperatur von 198° C und einem Massedruck von 64 bar mit einer Ausstoßleistung von 120 kg/h zu mehrkammerigen Hohlprofilen extrudiert. Die Abzugsgeschwindigkeit der extrudierten Profile betrug dabei ca.

2 m/min.

Die in der Tabelle 1 aufgezeigten Werte für den E-Modul und die Füllstoffvolumenkonzentration FVK zeigen, daß durch geeignete Auswahl der Rezepturen sowohl der gewünschte E-Modul-Bereich von > 2000 $N/mm^2$ (Beispiel 1, 6, 7, 16, 17) als auch der Vorzugsbereich mit > 2500 $N/mm^2$ erreicht wird (Beispiele 3, 8 und 18).

Die so hergestellten Profile lassen sich einwandfrei zu Rahmen für Fenster und Türen verschweißen. Es werden die marktüblichen geforderten Eckschweißfestigkeiten erreicht.

In Tabelle 1 werden die Eckwerte für die Komponentenanteile gemäß dem Vorzugsbereich nach Anspruch 2 bzw. 4 aufgeführt. Ausserhalb dieser Eckwerte werden zunehmend schlechtere Eigenschaften erreicht.

## TABELLE 1

| Beispiel Nr. | PP Gew.-Tl. | EPDM Gew.-Tl. | PE Gew.-Tl. | Glasfasern Gew.-Tl. | Talkum Gew.-Tl. | $TiO_2$ Gew.-Tl. | Stabilis. Gew.-Tl. | E-Modul (23°C) $(N/mm^2)$ | FVK (Vol.-%) |
|---|---|---|---|---|---|---|---|---|---|
| 1 | 100 | 6 | 0 | 1 | 20 | 8,1 | 0,7 | 2031 | 8,6 |
| 2 | 100 | 6 | 0 | 1 | 45 | 8,1 | 0,7 | 2550 | 15,6 |
| 3 | 100 | 6 | 0 | 8 | 20 | 8,1 | 0,7 | 2585 | 10,6 |
| 4 | 100 | 6 | 0 | 8 | 45 | 8,1 | 0,7 | 3104 | 17,3 |
| 5 | 100 | 6 | 49 | 1 | 20 | 11,8 | 1,0 | 1734 | 6,6 |
| 6 | 100 | 6 | 49 | 1 | 45 | 11,8 | 1,0 | 2254 | 11,7 |
| 7 | 100 | 6 | 49 | 8 | 20 | 11,8 | 1,0 | 2288 | 8,0 |
| 8 | 100 | 6 | 49 | 8 | 45 | 11,8 | 1,0 | 2807 | 13,0 |
| 9 | 100 | 28 | 0 | 1 | 20 | 9,7 | 0,9 | 1363 | 7,4 |
| 10 | 100 | 28 | 0 | 1 | 45 | 9,7 | 0,9 | 1883 | 13,5 |
| 11 | 100 | 28 | 0 | 8 | 20 | 9,7 | 0,9 | 1917 | 9,1 |
| 12 | 100 | 28 | 0 | 8 | 45 | 9,7 | 0,9 | 2436 | 14,9 |
| 13 | 100 | 28 | 49 | 1 | 20 | 13,5 | 1,2 | 1067 | 6,0 |
| 14 | 100 | 28 | 49 | 1 | 45 | 13,5 | 1,2 | 1586 | 10,6 |
| 15 | 100 | 28 | 49 | 8 | 20 | 13,5 | 1,2 | 1620 | 7,2 |
| 16 | 100 | 28 | 49 | 8 | 45 | 13,5 | 1,2 | 2140 | 11,7 |
| 17 | 100 | 9,6 | 0 | 6,7 | 24 | 8,3 | 0,7 | 2478 | 11,1 |
| 18 | 100 | 6 | 35 | 8 | 35 | 10,7 | 1,0 | 2706 | 11,9 |

**Beispiele 19 bis 36**

Die in Tabelle 1 für die Beispiele 1 bis 18 aufgeführten Mengen wurden wie dort beschrieben gemischt, granuliert und zu Profilen extrudiert, jedoch mit dem Unterschied, daß anstelle von Propylencopolymerisat ein Propylenhomopolymerisat verwendet wurde. Das Homopolymerisat hatte einen MFI 230/2,16 von 0,4 g/10 min, eine Dichte von 0,904 g/ml und einen E-Modul von 1300 N/mm², käuflich als Vestolen P 9000.

Auch in dieser Versuchsreihe zeigt sich, daß von ausgewählten Rezepturen nach den Mengenangaben des Anspruchs 2 sowohl der E-Modul > 2000 N/mm² (Beispiel 19, 23, 28, 29, 34) als auch der Vorzugsbereich > 2500 N/mm² (Beispiele 21, 24, 25, 26, 35, 36) unter Einhaltung der FVK und des PP/PE-Verhältnisses erreicht wird.

TABELLE 2

| Beispiel Nr. | PP Gew.-Tl. | EPDM Gew.-Tl. | PE Gew.-Tl. | Glasfasern Gew.-Tl. | Talkum Gew.-Tl. | $TiO_2$ Gew.-Tl. | Stabilisat. Gew.-Tl. | E-Modul (23°C) (N/mm²) | FVK (Vol.-%) |
|---|---|---|---|---|---|---|---|---|---|
| 19 | 100 | 6 | 0 | 1 | 20 | 8,1 | 0,7 | 2378 | 8,6 |
| 20 | 100 | 6 | 0 | 1 | 45 | 8,1 | 0,7 | 2397 | 15,6 |
| 21 | 100 | 6 | 0 | 8 | 20 | 8,1 | 0,7 | 2932 | 10,6 |
| 22 | 100 | 6 | 0 | 8 | 45 | 8,1 | 0,7 | 3451 | 17,3 |
| 23 | 100 | 6 | 49 | 1 | 20 | 11,8 | 1,0 | 2081 | 6,6 |
| 24 | 100 | 6 | 49 | 1 | 45 | 11,8 | 1,0 | 2600 | 11,7 |
| 25 | 100 | 6 | 49 | 8 | 20 | 11,8 | 1,0 | 2635 | 8,0 |
| 26 | 100 | 6 | 49 | 8 | 45 | 11,8 | 1,0 | 3154 | 13,0 |
| 27 | 100 | 28 | 0 | 1 | 20 | 9,7 | 0,9 | 1710 | 7,4 |
| 28 | 100 | 28 | 0 | 1 | 45 | 9,7 | 0,9 | 2229 | 13,5 |
| 29 | 100 | 28 | 0 | 8 | 20 | 9,7 | 0,9 | 2264 | 9,1 |
| 30 | 100 | 28 | 0 | 8 | 45 | 9,7 | 0,9 | 2783 | 14,9 |
| 31 | 100 | 28 | 49 | 1 | 20 | 13,5 | 1,2 | 1414 | 6,0 |
| 32 | 100 | 28 | 49 | 1 | 45 | 13,5 | 1,2 | 1933 | 10,6 |
| 33 | 100 | 28 | 49 | 8 | 20 | 13,5 | 1,2 | 1967 | 7,2 |
| 34 | 100 | 28 | 49 | 8 | 45 | 13,5 | 1,2 | 2486 | 11,7 |
| 35 | 100 | 9,6 | 0 | 6,7 | 24 | 8,3 | 0,7 | 2825 | 11,1 |
| 36 | 100 | 6 | 35 | 8 | 35 | 10,7 | 1,0 | 3053 | 11,9 |

EP 0 426 716 B1

**Patentansprüche**

1. Fenster- oder Türprofilleiste, bestehend aus thermoplastischem Kunststoff auf der Basis von Polyproplyen und/oder Propylencopolymer, modifiziert mit Ethylen-Propylen-Dienkautschuken (EPDM) und/oder Ethylen-Propylenkautschuken (EPM) und verstärkt mit Glasfasern und Talkum.

2. Fenster- oder Türprofilleiste nach Anspruch 1, hergestellt aus Formmassen enthaltend:
   A) 100 Gew.-Teile Polyproplyen und/oder Propylencopolymer,
   B) 6 - 28 Gew.-Teile EPDM und/oder EPM,
   C) 0 - 49 Gew.-Teile Polyethylen und/oder Ethylencopolymer,
   D) 1 - 8 Gew.-Teile Glasfasern,
   E) 20 - 45 Gew.Teile Talkum,
   F) 7 - 15 Gew.-Teile Titandioxid,
   G) 0,5 - 2 Gew.-Teile Polyolefinstabilisatoren,
   wobei die Profile
   a) eine Füllstoff-Volumenkonzentration an Glasfasern, Talkum und Titandioxid von < 14 Vol.-%, vorzugsweise < 12 Vol.-%, aufweisen und
   b) einen E-Modul bei 23 °C von > 2000 N/mm² und vorzugsweise > 2500 N/mm² besitzen.

3. Fenster- oder Türprofilleiste nach einem der Ansprüche 1 oder 2, **dadurch gekennzeichnet**, daß die Formmasse ein Polyethylen und/oder Ethylencopolymer enthält mit einem MFI (DIN 53 735) [190/5] < 0,1 g/10 min und MFI [190/21,6] < 5 g/10 min.

4. Verwendung einer Formmasse, enthaltend
   A) 100 Gew.-Teile Polyproplyen und/oder Propylencopolymer,
   B) 6 - 28 Gew.-Teile EPDM und/oder EPM,
   C) 0 - 49 Gew.-Teile Polyethylen und/oder Ethylencopolymer,
   D) 1 - 8 Gew.-Teile Glasfasern,
   E) 20 - 45 Gew.Teile Talkum,
   F) 7 - 15 Gew.-Teile Titandioxid,
   G) 0,5 - 2 Gew.-Teile Polyolefinstabilisatoren, zur Extrusion von Fenster- oder Türprofilleisten.

**Claims**

1. Window or door profile, consisting or thermoplastic plastics on the basis of polypropylene and/or propylene copolymer, modified with ethylene-propylene-diene rubbers (EPDM) and/or ethylene-propylene rubbers (EPM) and reinforced with glass fibres and talc.

2. Window or door profile according to claim 1, produced from moulding compounds containing:
   A) 100 parts by weight of polypropylene and/or propylene copolymer,
   B) 6 - 28 parts by weight of EPDM and/or EPM,
   C) 0 - 49 parts by weight of polyethylene and/or ethylene copolymer,
   D) 1 - 8 parts by weight of glass fibres,
   E) 20 - 45 parts by weight of talc,
   F) 7 - 15 parts by weight of titanium dioxide,
   G) 0,5 - 2 parts by weight of polyolefin stabilisers,
   wherein the profiles contain
   a) a filler volume concentration of glass fibres, talc and titanium dioxide of <14 vol.%, preferably <12 vol.-% and
   b) an E-modulus of >2000 N/mm², preferably > 2500 N/mm², at 23°C.

3. Window or door profile according to one of claims 1 or 2, characterised in that the moulding compound contains polyethylene and/or ethylene copolymer with an MFI (DIN 53 735) [190/5] < 0,1 g/10 min and MFI [190/21,6] < 5 g/10 min.

4. Use of a moulding compound containing
   A) 100 parts by weight of polypropylene and/or propylene copolymer,
   B) 6 - 28 parts by weight of EPDM and/or EPM,

C) 0 - 49 parts by weight of polyethylene and/or ethylene copolymer,

D) 1 - 8 parts by weight of glass fibres,

E) 20 - 45 parts by weight of talc,

F) 7 - 15 parts by weight of titanium dioxide,

G) 0,5 - 2 parts by weight of polyolefin stabilisers, for the extrusion of window or door profiles.

**Revendications**

1. Moulure profilée pour fenêtres ou portes, constituée de matière thermoplastique à base de polypropylène et/ou de copolymère de propylène, modifiée par des caoutchoucs d'éthylène, de propylène et de diène (EPDM) et/ou des caoutchoucs d'éthylène et de propylène (EPM) et renforcée par des fibres de verre et du talc.

2. Moulure profilée pour fenêtres ou portes selon la revendication 1 constituée de masses de moulage comprenant:

   A) 100 parties en poids de polypropylène et/ou de copolymère de propylène,

   B) 6 - 28 parties en poids d'EPDM et/ou d'EPM,

   C) 0 - 49 parties en poids de polyéthylène et/ou de copolymère d'éthylène,

   D) 1 - 8 parties en poids de fibres de verre,

   E) 20 - 45 parties en poids de talc,

   F) 7 - 15 parties en poids de bioxyde de titane et

   G) 0,5 - 2 parties en poids de stabilisateurs polyoléfiniques,

   les profilés

   a) présentant une concentration en volume de charge, c'est-à-dire de fibres de verre, de talc et de bioxyde de titane, inférieure à 14% en volume, de préférence inférieure à 12% en volume, et

   b) possédant un module E à 23°C supérieur à 2.000 N/mm$^2$, de préférence supérieur à 2.500 N/mm$^2$.

3. Moulure profilée pour fenêtres ou portes selon l'une quelconque des revendications 1 ou 2, caractérisée en ce que la masse de moulage contient un polyéthylène et/ou un copolymère d'éthylène présentant un MFI (DIN 53 735) (190/5) inférieur à 0,1 g/10 min et un MFI (190/21,6) inférieur à 5 g/10 min.

4. Emploi d'une masse de moulage contenant:

   A) 100 parties en poids de polypropylène et/ou de copolymère de propylène,

   B) 6 - 28 parties en poids d'EPDM et/ou d'EPM,

   C) 0 - 49 parties en poids de polyéthylène et/ou de copolymère d'éthylène,

   D) 1 - 8 parties en poids de fibres de verre,

   E) 20 - 45 parties en poids de talc,

   F) 7 - 15 parties en poids de bioxyde de titane et

   G) 0,5 - 2 parties en poids de stabilisateurs polyoléfiniques,

   pour l'extrusion de moulures profilées pour fenêtres ou portes.

Fig.